# EUROPEAN PATENT APPLICATION

(11) **EP 3 696 946 A1**
(43) Date of publication of application: **19.08.2020**
(21) Application number: 19157109.0
(22) Date of filing: 14.02.2019
(51) Int. Cl.: H02K 1/14, H02K 3/52

(54) **PUMP WITH A WIRE POSITIONING PLATE**

(71) Applicant: Xylem Europe GmbH, 8200 Schaffhausen (CH)
(72) Inventor: DANIELI, Stefano, 36078 Valdagno (IT); D'ANDREA, Luigi, 36016 Thiene (IT)
(74) Representative: Modiano, Gabriella Diana

(57) **Abstract**

The present disclosure describes a pump comprising an electric motor having a stator assembly. The stator assembly comprises a wire positioning plate supporting electrical connections for electrical contact with at least one lead wire, wherein a plurality of wire guides extend vertically from the wire positioning plate, each wire guide having at least one guide path for supporting wire portions of the at least one lead wire over the wire positioning plate wherein the guide paths are vertically arranged relative to the wire positioning plate such that an overlapping wire portion is vertically spaced from a corresponding supported wire portion.

## Description

### Technical Field

This disclosure generally relates to the pumps with electrical motors and in particular to pumps with electrical motors having stator assemblies provided with wire connection plates.

### Background

A pump may generally be driven by an electric motor. The electric motor has a stator assembly that usually comprises a core onto which winding carriers are mounted. A plurality of stator windings are wound around the winding carriers. A wire connection plate may be disposed on one of the axial ends, on which electrical connection elements or contact elements are provided for the connection of a single lead wire or a plurality of lead wires. The single or plurality of lead wires are guided to the contact elements for connection thereto. The single or plurality of lead wires may be disposed at different circumferential positions in relation to the locations of the winding coils. Insulation problems may occur at contact points between portions of the lead wire or between portions of the plurality of lead wires. The voltage difference at these contact points of the lead wire or of the plurality of lead wires may result in sparking.

US8179003 discloses a motor with a wire fixing plate having a stator core, a stator winding, a lead wire. The wire fixing plate has multiple fixed portions. The wire fixing plate is made of insulating plastics, and the lead wire is fixed on the wire fixing plate via the fixed portions. The motor features firm fixation and good insulating property of a lead wire by way of grooves and pressing buckles.

EP0993095 discloses a stator having a stator plate packet with stator windings, and a cross-wiring arrangement for cross-connection of the stator winding wires to electrical connecting leads. Insulating end plates are formed on the ends of the stator plate packet. The cross-connection arrangement has at least one multiple contact chamber. This is formed by sub-chambers that are adjacent to a cross-connection plate, in the mounted state, and accommodate a common contact element connecting the sub-chambers.

The present disclosure is directed, at least in part, to improving or overcoming one or more aspects of the prior art system.

### Brief Summary of the Invention

The present disclosure describes a pump comprising an electric motor having a stator assembly. The stator assembly comprises a wire positioning plate supporting electrical connections for electrical contact with at least one lead wire, wherein a plurality of wire guides extend vertically from the wire positioning plate, each wire guide having at least one guide path for supporting wire portions of the at least one lead wire over the wire positioning plate wherein the guide paths are vertically arranged relative to the wire positioning plate such that an overlapping wire portion is vertically spaced from a corresponding supported wire portion.

### Brief Description of the Drawings

The foregoing and other features and advantages of the present disclosure will be more fully understood from the following description of various embodiments, when read together with the accompanying drawings, in which:
Fig. 1 is an exploded view of a pump with an electric motor according to the present disclosure;
Fig. 2 is an exploded view of a stator assembly of the pump of Fig. 1;
Fig. 3 is an isometric view from the top of a wire connection plate of the stator assembly of Fig. 2;
Fig. 4 is an isometric view from the bottom of a wire connection plate of the stator assembly of Fig. 2;
Fig. 5 is a isometric view from the top of a stator assembly with the lead wire disposed on the wire connection plate;
Fig. 6 is a side view of a stator assembly with the lead wire disposed on the wire connection plate; and
Fig. 6A is an expanded view of a portion of the stator assembly of Fig. 6.

### Detailed Description

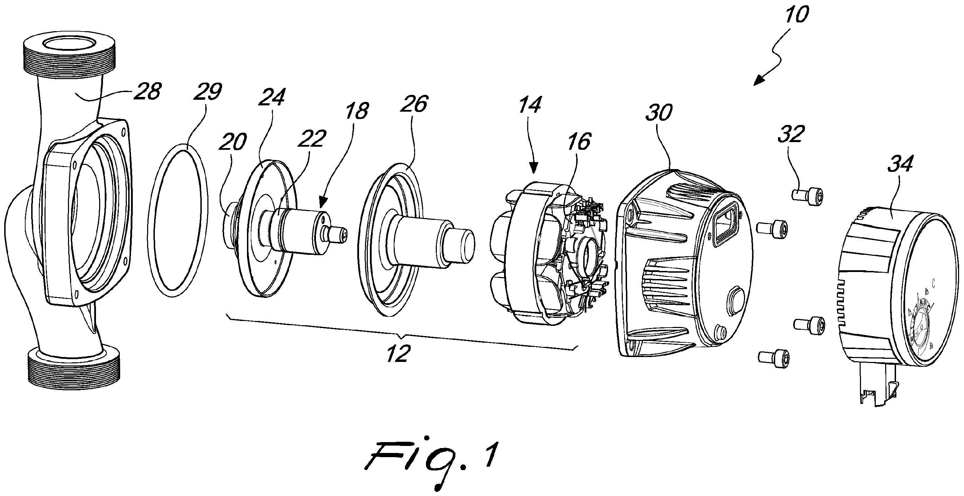

This disclosure generally relates to a pump having a separation of wires or a separation of portions of wires so as to avoid insulation problems. Fig. 1 illustrates a pump **10.** Pump **10** has an electric motor **12** having a stator assembly **14.** The stator assembly **14** has a wire positioning plate **16.** Electric motor **12** further comprises a rotor assembly **18** and an impeller **20.** The rotor assembly **18** and the impeller **20** are disposed in a rotor can **26.**

Electric motor **12** may further comprises a thrust bearing assembly **22** and a bearing plate assembly **24.** The thrust bearing assembly **22** and the bearing plate assembly **24** may be positioned between the rotor assembly **18** and the impeller **20.**

The electric motor **12** is contained between a pump housing **28** and a motor housing **30.** The motor housing **30** is mounted to the pump housing **28** by screws **32.** An O-ring **29** is disposed between the rotor can **26** and the pump housing **28.** A control box assembly **34** is positioned over the motor housing **30.**

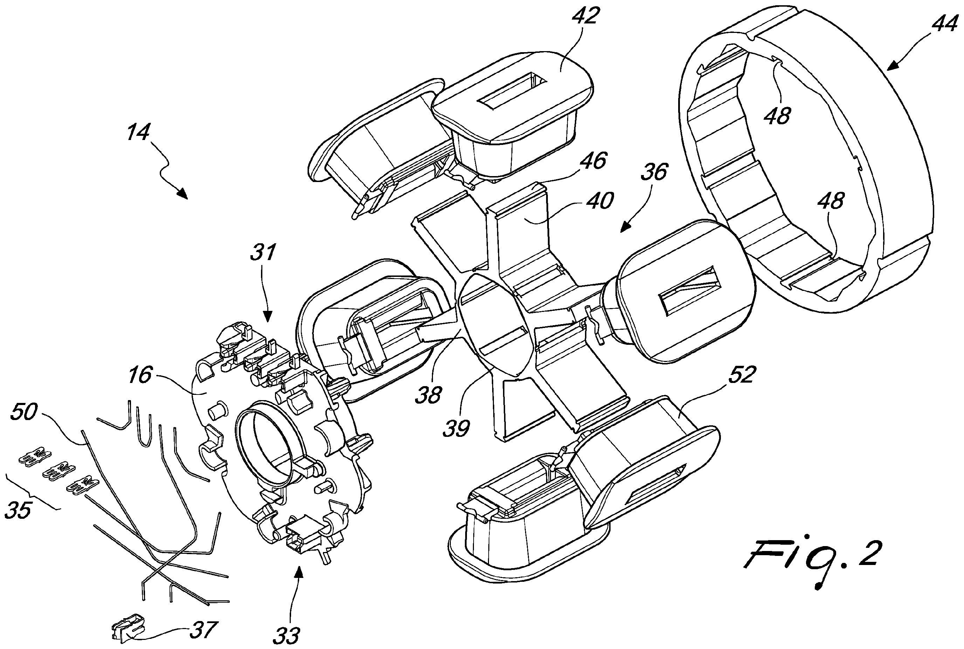

Fig. 2 illustrates the stator assembly **14** in an exploded view. The stator assembly **14** comprises of a stator body star **36.** Stator body star **36** has a core **38** and a plurality of arms **40.** The plurality of arms poles **40** radially extend from the core **38.** Core **38** has a through opening **39.** Opening **39** is configured to receive the rotor can **26.** The stator body **36** is fixed relative to the rotor can **26.** The rotor can **26** is configured to extend through the core **38** and to project beyond the stator body star **36.**

A plurality of winding carriers **42** are supported on the arms poles **40.** A stator ring **44** is configured to be connected to the stator body star **36.** Arms poles **40** are configured to connect to the stator ring **44** through a press fit engagement. Terminal ends **46** of each arm are configured to be connected to corresponding grooves **48** in the inner side of the stator ring **44.** Each winding carrier **42** is held on the respective arm poles **40** by the mounting of the stator ring **44** to the stator body **36.** The winding carriers **42** are radially positioned about the wire positioning plate **16.**

The winding carriers **42** may carry at least one lead wire **50.** In an embodiment, the winding carriers **42** carries two lead wires **50.** In a further embodiment, the winding carriers **42** carries three lead wires **50.** The wire positioning plate **16** maintains the separation of different portions of the at least one lead wire **50.** In an embodiment, the wire positioning plate **16** maintains the separation of different the lead wires **50.** In a further embodiment, the wire positioning plate **16** maintains the separation of different portions of the lead wire **50** and maintains the separation of different the lead wires **50.** The wire positioning plate **16** maintains an air gap between the portions of the at least one lead wire **50** and/ or maintains an air gap between the different the lead wires **50.** The at least one lead wire **50** may be formed as a plurality of windings **52** on the winding carriers **42.** The at least one lead wire **50** extends from the plurality of windings **52.** In an embodiment, a plurality of lead wires **50** are formed as in separate windings **52** on the respective winding carriers **42.**

The wire positioning plate **16** supports electrical connections **31, 33.** Electrical connections **31, 33** are provided for electrical contact with at least one lead wire **50** or a plurality of lead wires **50** provided in the stator assembly **14.** Electrical connections **31** may comprise power pins **35.** Electrical connections **31** enables electricity to flow into the stator assembly **14.** Electricity flows from the power pins **35** to the at least one lead wire **50** or the plurality of lead wires **50.** Electrical connection **33** may comprise a star connection such as a star connection pin **37.** Electrical connection **33** enables electricity to flow out from the stator assembly **14.** Electricity flows from the at least one lead wire **50** or the plurality of lead wires **50** to star connection pin **37.**

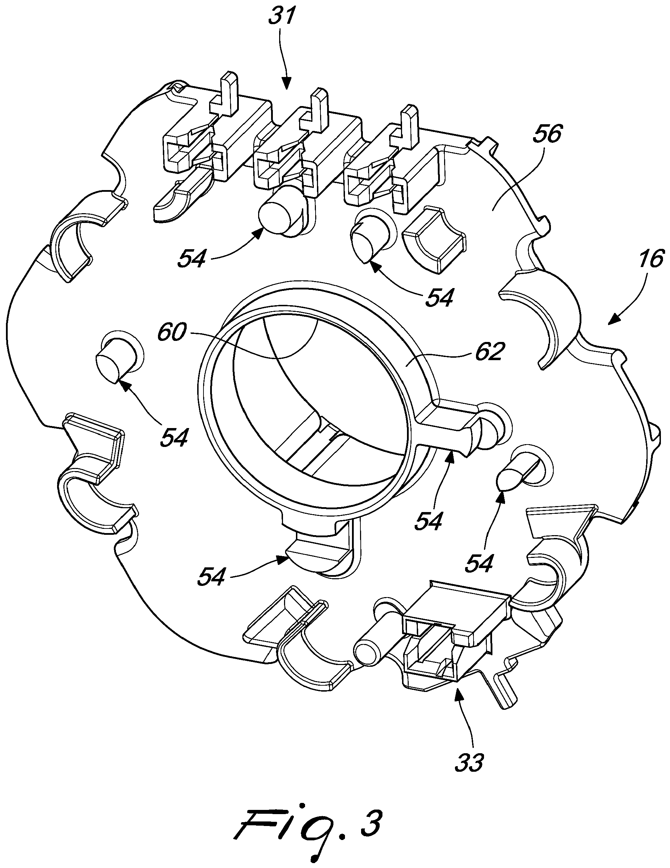

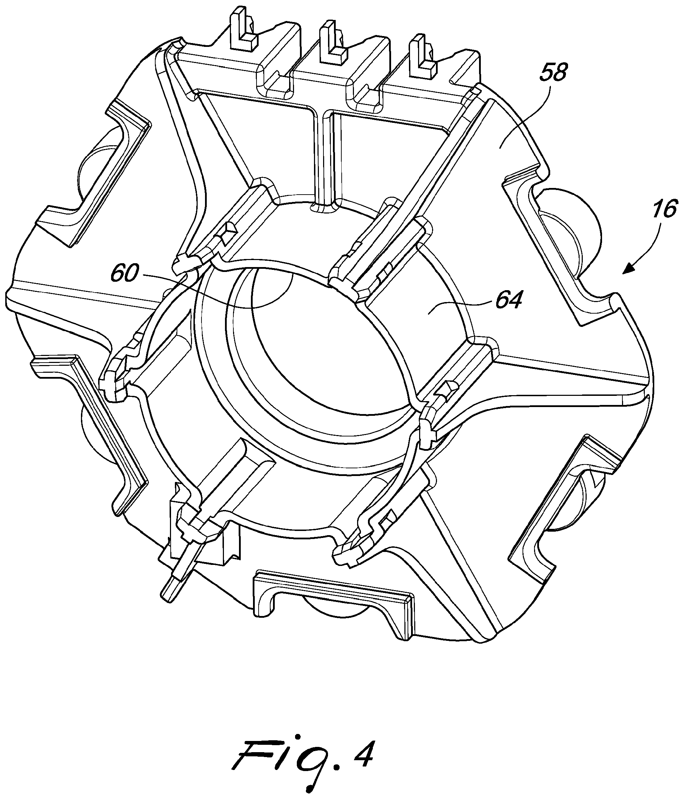

Figs. 3 and 4 illustrate the wire positioning plate **16.** Wire positioning plate **16** is composed of non-conducting material. Wire positioning plate **16** has a proximate surface **58** and a distal surface **56.** The distal surface **56** may face away from the stator body **36** and the proximate surface **58** may face the stator body star **36.**

A central aperture **60** extends between the proximate surface **58** and the distal surface **56.** Central aperture **60** may extend beyond the proximate surface **58** and the distal surface **56.** The central aperture **60** may be bound by a distal side wall **62** on the distal surface **56.** The central aperture **60** may be bound by a proximate side wall **64** on the proximate surface **58.** Central aperture **60** may have the same diameter as the through opening **39** of the stator core **38.** Distal side wall **62** may be concentric with the proximate side wall **64.** Electrical connections **31, 33** extend from the distal surface **56** of the wire positioning plate **16.**

Wire positing plate **16** is held in position in the stator assembly **14** through the central aperture **60** and the axially extending projections **61.** The central aperture **60** enables passage of a portion of the rotor can **26.** Wire positing plate **16** is disposed on the rotor can **26** so as to be retained in a fixed position relative to the stator body star **36.**

The wire positioning plate **16** comprise a plurality of wire guides **54.** The plurality of wire guides **54** are disposed on the surface of the wire positioning plate **16.** The plurality of wire guides **54** may be disposed on the distal surface **56** of the wire positioning plate **16.** The plurality of wire guides **54** extend vertically from the wire positioning plate **16.** Each wire guide **54** are composed of non-conducting material. Each wire guide **54** may be formed of a plastic material.

The plurality of wire guides **54** may be mutually spaced along the wire positioning plate **16.** The plurality of wire guides **54** may be mutually horizontally spaced relative to the distal surface **56.** The plurality of wire guides **54** may be disposed around the central aperture **60.** The plurality of wire guides **54** may be disposed around the distal side wall **62.** The spacing between the wired guides **54** may be configured such that any potential damage to a single wire guide **54** is compensated by adjacent wire guides **54.**

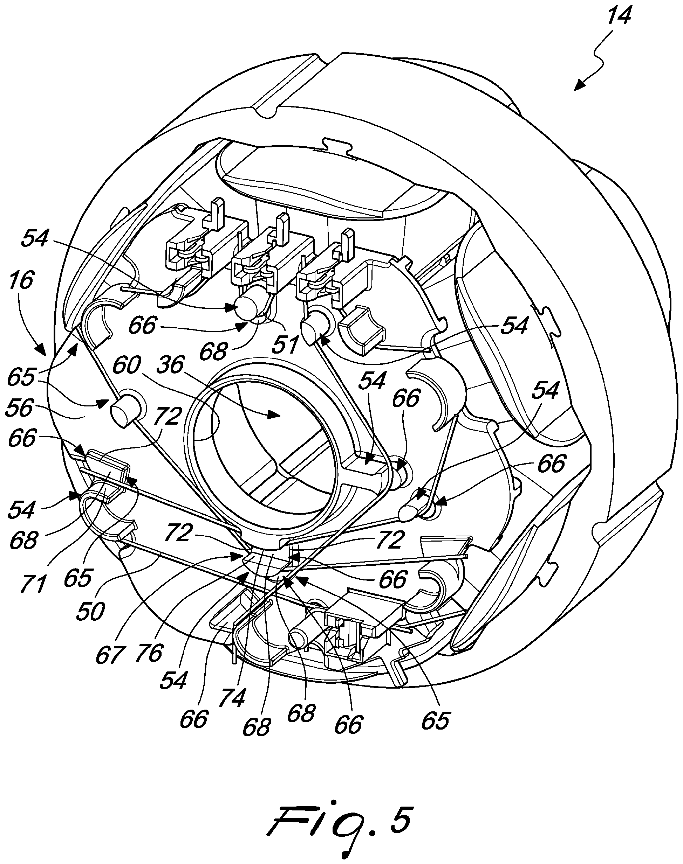

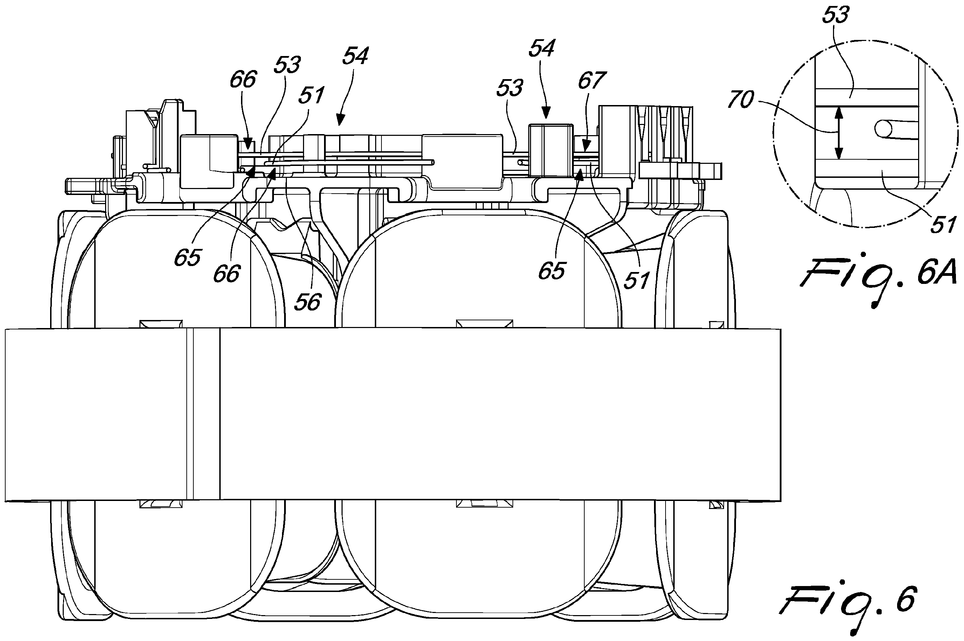

Figs. 5 and 6 illustrate a wire positioning plate **16** positioned adjacent the stator body star **36.** Wire positioning plate **16** is axially positioned relative to the stator body **36.** At least one lead wire **50** is fixed to the wire positioned plate **16.** Each wire guide **54** has at least one guide path **66** for supporting wire portions **51** of the at least one lead wire **50** over the wire positioning plate **16.** Supported wire portions **51** of the at least one lead wire **50** are vertically spaced relative to the wire positioning plate **16** by respective wire guides **54.** The supported wire portions **51** of the at least one lead wire **50** are vertically spaced from the distal surface **56** of the wire positioning plate **16.**

With reference to Fig. 6, the guide paths **66** are vertically arranged relative to the wire positioning plate **16** so that an overlapping wire portion **53** is mutually vertically spaced from a corresponding supported wire portion **51.** An overlapping wire portion **53** is a portion of the at least one lead wire **50** that extends over a supported wire portion **51.** In an embodiment, the supported wire portion **51** and the overlapping wire portion **53** are of different lead wires **50.**

With reference to Fig. 6A, an air gap **70** is present between the overlapping wire portion **53** and the corresponding wire portion **51** as a result of the vertical positioning of the respective wire portions **51, 53.** Each guide path **66** is vertically spaced from the distal surface **56.** The guide paths **66** may have different vertical spacing from the distal surface **56** in order to provide the required vertical positioning of the respective wires portions **51, 53.** The specific vertical spacing for each guide path **66** may be provided as required for fixing of the at least one wire **50.**

With reference to Fig.5, each guide path **66** comprises a guide surface **68.** The wire portions are supported on the respective surfaces **68.** Each guide surface **68** is vertically spaced from the distal surface **56.** The guide surfaces **68** may have different vertical spacing from the distal surface **56** in order to provide the required vertical positioning of the respective wires portions **51, 53.** The specific vertical spacing for each guide surface **68** may be provided as required for fixing of the at least one lead wire **50.**

The guide surface **68** is planar and defines the plane of the guide path **66.** Each guide surface **68** may be substantially perpendicular to the respective wire guide **54.** Each guide surface **68** may be parallel to the distal surface **56.**

In an embodiment, the guide paths **66** extend laterally from the respective wire guides **54.** The guide surfaces **68** extend laterally from the respective wire guide **54.** Guide surfaces **68** are bound by a portion of the wire guide **54.** Guide surfaces **68** are bound by an upright wall **71** along a lateral edge. Guide surfaces **68** have a free edge **72** extending from the upright wall **71.**

In an embodiment, the guide paths **66** extend through the respective wire guides **54.** Guide surfaces **68** are formed as cut-outs of the respective wire guides **54.** Guide surfaces **68** are bound by a first upright wall **74** along a lateral edge and a second upright wall **76.** Guide surfaces **68** have free edges **72** extending between the first upright wall **74** and a second upright wall **76.**

With reference to Figs. 5, 6 and 6A, the plurality of wire guides **54** may be arranged to enable the vertical spacing for respective overlapping wire portions **53** to pass over corresponding supported wire portions **51.** The plurality of wire guides **54** may be arranged into arrays. The arrays may be configured in accordance with the required passage of the at least one lead wire **50.** The guide paths **66** in each respective array have the same vertical spacing from the wire plate **16.** The surfaces **68** in each array have the same vertical spacing from the distal surface **56.**

In an embodiment, the plurality of wire guides **54** comprise at least a first guide array **65** and a second guide array **67.** The guide paths **66** of first guide array **65** are vertically spaced relative to the guide paths **66** of the second guide array **67.** The surfaces **68** of the guide paths **66** of first guide array **65** are vertically spaced relative to the guide surfaces **68** guide paths **66** of the second guide array **67.** Guide paths **66** and the respective guide surfaces **68** of the first guide array **65** are uniformly vertically spaced relative to the guide paths **66** of the second guide array **67** and the respective guide surfaces **68** of the second guide array **67.** The plane of the guide surfaces **68** of the first guide array **65** is vertically spaced relative to the plane of the guide surfaces **68** of the second guide array **67.** The plurality of wire guide **54** may be arranged into further number of arrays as required relative to the number of overlapping segments.

In an embodiment, the wire positioning plate **16** supports a plurality of lead wires **50.** The plurality wire guides **54** are configured for supporting portions of the plurality of lead wires **50** over the wire positioning plate **16.** Each wire guide **54** has a guide path **66** for supporting portions of the plurality of lead wires **50** over the wire positioning plate **16.**

The plurality of wire guides **54** comprise at least a first guide array **65** for supporting a first lead wire **50** and a second guide array **67** for supporting a second lead wire **50** wherein the guide paths **66** are vertically disposed such that an overlapping wire portion **53** of the first lead wire **50** is vertically spaced from a corresponding supported wire portion **51** of the second lead wire **50.**

The guide paths **66** of first guide array **65** are vertically spaced at a greater height from the wire positioning plate **16** relative to the guide paths **66** of the second guide array **67.** The guide surfaces **68** of the guide paths **66** of first guide array **65** are vertically spaced at a greater height from the wire positioning plate **16** relative to the guide surfaces **68** guide paths **66** of the second guide array **67.** Guide paths **66** and the respective guide surfaces **68** of the first guide array **65** are uniformly vertically spaced at a greater height from the wire positioning plate **16** relative to the guide paths of the guide paths **66** and the respective guide surfaces **68** of the second guide array **67.** The plane of the guide surfaces **68** of the first guide array **65** is vertically spaced at a greater height from the wire positioning plate **16** relative to the plane of the guide surfaces **68** of the second guide array **65.**

The skilled person would appreciate that foregoing embodiments may be modified or combined to obtain the pump **10** of the present disclosure.

### Industrial Applicability

This disclosure describes a pump **10** having a wire connection plate **16.** The wire connection plate **16** has wire guides **54** for supporting portions of a lead wire **50** or portions of a plurality of lead wires **50**. The wire guides **54** prevent contact of overlapping portions **51**, **53** of a lead wire **50** or of overlapping portions **51**, **53** of a plurality of lead wires **50**. The wire guides **54** support the overlapping portions **51**, **53** in a vertical arrangement so as to vertically separate the overlapping portions **51**, **53**. The wire guides **54** support overlapping portions **51**, **53** in differing vertical distances. The wire guides **54** define the wire paths **66** having path planes that are configured to ensure that there is no contact zone between the overlapping portions **51**, **53** of a wire **50** or overlapping portions **51**, **53** of a plurality of wires **50** to prevent a short circuit and increase the insulation level. The production costs of the wire plate **16** is reduced as it is made from plastics.

The wire plate **16** provides an increased reliability in case of damage to a wire guide **54** as the horizontal distance between guided wires is determined so as to offset damage in respect to adjacent wire guide **54.**

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A pump (10) comprising:
an electric motor (12) having a stator assembly (14), the stator assembly (14) comprising:
a wire positioning plate (16) supporting electrical connections (31, 33) for electrical contact with at least one lead wire (50),
wherein a plurality of wire guides (54) extend vertically from the wire positioning plate (16), each wire guide (54) having at least one guide path (66) for supporting wire portions (51) of the at least one lead wire (50) over the wire positioning plate (16) and
wherein the guide paths (66) are vertically arranged relative to the wire positioning plate (16) such that an overlapping wire portion (53) is vertically spaced from a corresponding supported wire portion (51).

2. The pump (10) of claim 1 wherein the plurality of wire guides (54) comprise at least a first guide array and a second guide array wherein the guide paths (66) of first guide array are vertically spaced relative to the guide paths (66) of the second guide array.

3. The pump (10) of claim 1 wherein the wire positioning plate (16) supports a plurality of lead wires (50) wherein the plurality wire guides (54) are configured for supporting portions of the plurality of lead wires (50) over the wire positioning plate (16).

4. The pump (10) of claim 3 wherein the plurality of wire guides (54) comprise at least a first guide array for supporting a first lead wire (50) and a second guide array for supporting a second lead wire (50) wherein the guide paths (66) are vertically disposed such that an overlapping wire portion (53) of the first lead wire (50) is vertically spaced from a corresponding supported wire portion (51) of the second lead wire (50).

5. The pump (10) of claims 2 or 4 wherein the guide paths (66) of first guide array are vertically spaced at a greater height from the wire positioning plate (16) relative to the guide paths (66) of the second guide array.

6. The pump (10) of any one of preceding claims wherein the guide paths (66) comprise respective planar surfaces (68).

7. The pump (10) of claim 6 wherein the guide paths (66) extend laterally from the respective wire guides (54).

8. The pump (10) of claim 7 wherein the planar surfaces (68) extend laterally from the respective wire guides (54).

9. The pump (10) of claim 6 wherein the guide paths (66) extend through the respective wire guides (54).

10. The pump (10) of claim 9 wherein the planar surfaces (68) are formed as cut-outs of the respective wire guides (54).

11. The pump (10) of any one of preceding claims wherein the wire positioning plate (16) has a central aperture (60) for passage of a rotor can (26).

12. The pump (10) of any one of preceding claims wherein the stator assembly (14) further comprises a stator body (36) having a core (38) and a plurality of radially extending arms poles (40) wherein the wire positioning plate (16) is axially positioned relative to the stator body star (36).

13. The pump (10) of claim any one of preceding claims wherein the stator assembly (14) further comprises a plurality of winding carriers (42) radially positioned about wire positioning plate (16) wherein the at least one lead wire (50) extends from the winding carriers (42) to the wire positioning plate (16).

14. The pump (10) of any one of preceding claims wherein wire positioning plate (16) is composed of non-conducting material.
